# DEMANDE DE BREVET EUROPEEN

(11) **EP 1 593 604 A1**
(43) Date de publication de la demande: **09.11.2005**
(21) Numéro de dépôt: 04405286.8
(22) Date de dépôt: 05.05.2004
(51) Int. Cl.: B65C 9/44, B31B 19/10, B26D 5/34

(54) **Procédé et dispositif de detection de motifs sur un substrat**

(71) Demandeur: BOBST S.A., 1001 Lausanne (CH)
(72) Inventeur: Pilloud, Francis, CH-1815 Clarens (CH); Servet, Patrick, CH-1053 Cugy (CH)
(74) Mandataire: Savoye, Jean-Paul

(57) **Abrégé**

Le dispositif de détection (1) de motifs sur un substrat (2), entraîné en défilement, notamment sur un substrat à déposer sur une matière en bande ou en feuilles, substrat tel qu'une bande métallisée entraînée en défilement selon un sens de déplacement (20). Le dispositif comprend, dans un boîtier (3), un premier faisceau incident (I1) issu d'une première source lumineuse (4), un second faisceau incident (I2) issu d'une seconde source lumineuse (5), un système optique de mesure (10), un capteur photosensible (13) recevant respectivement des faisceaux réfléchis (R1, R2) par le substrat (2) et une unité électronique (14) reliée à un port de communication (16). Le système optique de mesure (10) est télécentrique, le premier faisceau incident (I1) traverse un système d'éclairage télécentrique (15) et le second faisceau incident (12) traverse un système d'éclairage oblique (25).

## Description

La présente invention a pour objet un procédé et un dispositif de détection de motifs sur un substrat, entraîné en défilement, notamment sur un substrat à déposer sur une matière en bande ou en feuilles.

De tels substrats se rencontrent généralement sous la forme de bandes métallisées. De tels substrats, à déposer sur des matières en bandes ou en feuilles, sont par exemple utilisés dans l'industrie de l'emballage pour apposer des dorures sur des découpes de boîtes ou sur tout autre élément en bande ou en feuilles. Cette opération peut se faire typiquement soit dans une presse à platines, soit dans une presse rotative ou toute autre machine de traitement, à l'aide d'une bande métallisée et de clichés qui, avec la matière en bande ou en feuilles à traiter, sont comprimés l'un contre l'autre entre des outils supérieurs et inférieurs de la presse ou de la machine de traitement. Sous la pression engendrée par ces presses ou machines de traitement, une portion de la bande métallisée est ainsi découpée et déposée par thermocollage sur l'élément en bande ou en feuilles. Le document US5486254 décrit et illustre plus en détail l'une de ces presses et notamment un dispositif permettant de mettre en registre des motifs pré-imprimés sur une bande avec des clichés d'une presse à estamper.

Il existe un grand nombre de types de bandes métallisées parmi lesquelles ont mentionnera les bandes spéculaires unies réfléchissantes, les bandes à diffraction holographiques et les bandes structurées réfléchissantes. Ces dernières ont un effet chatoyant et changeant pouvant présenter des motifs plus ou moins apparents suivant l'angle sous lequel on les regarde.

Les bandes unies simples sont généralement uniformes d'un bout à l'autre et ne comportent pas de motifs particuliers. Elles peuvent donc être utilisées dans la presse sans devoir tenir compte de la position d'une marque d'impression particulière. Seule l'utilisation optimale de la matière visant à réduire la gâche sera le principal critère pris en compte pour définir l'avance de la bande.

Avec l'emploi de bandes à hologrammes, le conducteur de la machine devra être à même de garantir que l'avance de la bande sera parfaitement contrôlée de façon à ce que les motifs, que sont les hologrammes, soient constamment en parfait registre avec les clichés qui les appliquent sur les éléments en plaque. Un léger décalage ne saurait être tolérable du fait qu'il tronquerait le motif ou provoquerait une application décentrée de l'hologramme.

Dans le cas notamment de l'utilisation de bandes dites structurées, il convient de veiller à ce que des portions de bande ne soient au contraire pas appliquées par les clichés. En effet, de telles bandes comportent régulièrement des raccords tous les 50 ou 60 cm par exemple. Ces raccords découlent du mode de fabrication de la bande elle-même. Ils résultent de l'impression de la couche décorative sur le film support de la bande. Etant donné que l'impression se fait sur une rotative équipée d'un cliché cylindrique portant la structure géométrique à imprimer, il s'ensuit qu'à chaque tour du cylindre d'impression apparaîtra sur la bande un fin trait transversal d'une largeur d'un ou de quelques dixièmes de millimètre. Ce raccord provient directement du cliché cylindrique dont le motif ne peut couvrir en totalité les 360° du cylindre.

De tels raccords de bande peuvent également être présents sur des bandes holographiques. Dans le cas où la distance entre deux raccords ne correspondrait pas à un multiple du pas des hologrammes de la bande, il est fort probable que le motif d'un de ces hologrammes chevauchera malencontreusement un raccord. Pour la fabrication d'emballages de grande qualité, il ne peut être admis qu'un motif holographique traversé d'un raccord soit apposé sur la découpe d'un carton d'emballage. Dans pareil cas, il conviendra de sauter le motif holographique en question et d'apposer le suivant.

Par l'utilisation du terme motif on comprendra ici, et dans l'ensemble de la description qui va suivre, qu'il peut s'agir aussi bien d'un hologramme pré-imprimé sur la bande, que d'un raccord de bande ou d'une transition entre deux substrats de structures différentes, d'une marque de repérage ou encore de l'empreinte que déposera le cliché sur l'élément en plaque. Dans certains cas, il convient d'assurer que le motif, par exemple holographique, soit toujours en parfait registre avec les clichés, alors que dans d'autres cas il conviendra au contraire de veiller à ce que le motif, par exemple un raccord de bande, ne soit justement jamais estampé par les clichés sur les éléments en plaque.

Il est connu d'utiliser des dispositifs de lecture de bande permettant de détecter, avant l'estampage, le passage d'un de ces motifs et de modifier en conséquence l'avance de la bande métallisée. De tels dispositifs de lecture comprennent au moins un organe d'éclairage de la bande, un objectif et un capteur photoélectrique traduisant l'intensité de la lumière réfléchie par la bande en un signal de réponse.

Classiquement, les objectifs de ces dispositifs sont simples et voient chaque point de la portion de bande auscultée sous un angle différent qui varie également en fonction de la distance de mesure, à savoir en fonction de l'éloignement de l'objectif par rapport au plan de la bande. Ces dispositifs de lecture sont aussi dotés d'un ou de deux éclairages symétriques, externes à l'optique de mesure et inclinés par rapport à l'axe optique de mesure. Si de tels dispositifs conviennent bien pour la lecture de bandes diffusantes où la lumière est précisément diffusée dans tout l'angle solide formé par les deux éclairages, ils deviennent en revanche inadéquats pour l'auscultation de bandes spéculaires où la lumière est réfléchie en dehors de l'ouverture de l'optique de mesure.

Dans d'autres cas, le dispositif d'éclairage externe à l'optique de mesure comporte un miroir semi-transparent disposé à 45° devant l'objectif, ainsi qu'une source de lumière placée perpendiculairement à l'axe de mesure. La lumière de la source, réfléchie partiellement par la lame, éclaire la bande selon le même axe que le système optique de mesure. Si le substrat est métallisé, la lumière réfléchie par le substrat revient en direction de l'objectif, une partie réfléchie par la lame semi-transparente est perdue, l'autre partie pénètre dans l'objectif et permet la mesure. Dans le cas de l'utilisation de substrats diffusants, la grande majorité de la lumière incidente est diffusée dans toutes les directions après réflexion et seule une très faible partie est renvoyée en direction de l'objectif. Cette faible partie renvoyée dans l'objectif ne dépend pas ou peu de l'angle d'incidence de l'éclairage. Il n'est donc pas nécessaire que l'éclairage soit dans le même axe que l'axe de l'optique de mesure. On recherchera plutôt à obtenir un éclairage d'intensité maximum qui est souvent plus facile à obtenir par un éclairage indirect.

Dans les systèmes matriciels, il existe des dispositifs d'éclairage qui combinent à la fois un éclairage direct, perpendiculaire au plan de la bande, et un éclairage indirect, placé obliquement par rapport à ce plan. Or, vu l'encombrement de ces dispositifs d'éclairage, les capteurs qui intègrent à la fois un dispositif de mesure et un dispositif d'éclairage, comportent un objectif de mesure simple, comme décrit précédemment, ainsi qu'un système d'éclairage peu performant, soit du type diffus, soit du type direct. Les capteurs photoélectriques associés à ces caméras sont destinés à fournir des images d'une portion de la bande ayant une surface généralement équivalente à plusieurs milliers de pixels. De tels capteurs génèrent donc des volumes de données image très importants qui peuvent être difficilement traitables dans des intervalles de temps réduits.

Parmi les différents capteurs connus à ce jour, on s'est aperçu que les capteurs qui donnaient le meilleur rapport signal/bruit avec des bandes structurées, devenaient non fiables à l'utilisation d'autres types de bandes à effet spéculaire. Aucun capteur ne permet actuellement de pouvoir traiter efficacement d'une façon fiable toutes les différentes sortes de bandes, qu'elles soient métallisées ou non, diffusantes, structurées, réfractives ou à diffraction. La solution retenue à ce jour vise à placer au moins deux capteurs dans la presse à platine; l'un dédié par exemple aux bandes structurées et l'autre plus spécifiquement aux autres types de bandes. Il est alors nécessaire de commuter manuellement entre un capteur et l'autre en fonction du type de bande utilisé. Le coût moyen d'un tel capteur étant déjà particulièrement élevé, une telle solution s'en trouve donc économiquement peu opportune.

Un autre inconvénient de ces dispositifs réside dans le fait que le choix du type d'éclairage à privilégier selon le substrat utilisé dépendra souvent des connaissances du conducteur de la machine ainsi que des résultats de multiples essais. De plus, la qualité de la réponse donnée par le capteur variera également en fonction du positionnement angulaire des dispositifs d'éclairage et du dispositif de lecture par rapport au plan de la bande. Un mauvais réglage ne permettra pas d'obtenir un rapport signal/bruit suffisamment contrasté pour pouvoir garantir la détection du passage d'un motif donné, ceci en particulier lorsque le fond de la bande est structuré et comporte par exemple une multitudes de faux motifs en damier.

Avec l'utilisation récente des bandes structurées, les capteurs actuels ont en effet particulièrement de la peine à différentier le raccord de la bande d'un bord d'une des formes géométriques qui constituent le fond structuré de la bande. Lorsque cette structure de fond est par exemple en damier, il devient particulièrement difficile de détecter un motif, tel qu'un raccord de bande, tant le rapport signal/bruit donné par le capteur n'est pas suffisamment tranché.

Le but de la présente invention vise à remédier aux inconvénients précités en suggérant un dispositif de détection de motifs qui permette la lecture de motifs sur des substrats, telles que des bandes à estamper, de tout type. Ce dispositif de détection doit également être simple à mettre en oeuvre; il ne doit nécessiter aucune opération de réglage particulière, quel que soit le type de bande utilisée, et ne doit pas occasionner de réglages manuelles durant la phase de calibrage. La présente invention porte également sur un procédé de détection automatisé, appliqué à ce dispositif.

Ces buts sont atteints grâce à la présente invention qui a pour objet un dispositif de détection de motifs sur un substrat, notamment sur un substrat telle qu'une bande à estamper entraînée en défilement, conforme à ce qu'énonce la revendication 1, ainsi qu'un procédé de détection conforme à ce qu'énonce la revendication 8.

L'invention sera mieux comprise à l'étude d'un mode de réalisation préféré, pris à titre nullement limitatif et illustré par les figures annexées dans lesquelles:
La figure 1 est une vue schématique du dispositif de détection de la présente invention.
La figure 2 représente un organigramme illustrant le procédé de détection appliqué dans la phase d'apprentissage du dispositif de la figure 1.
La figure 3 représente un organigramme illustrant le procédé de détection appliqué dans la phase d'exploitation du dispositif de la figure 1.

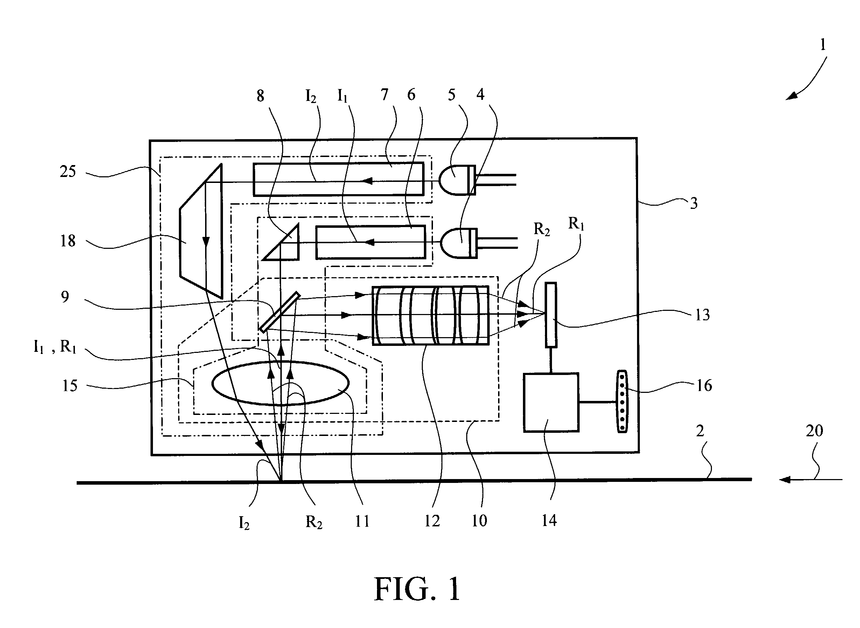

La figure 1 est une vue schématique du dispositif de détection 1 de motifs sur un substrat 2, entraîné en défilement, à déposer sur une matière en bande ou en feuilles, substrat entraîné en défilement par un organe d'entraînement selon un sens de déplacement 20 illustré par la flèche correspondante. Le dispositif de détection 1 est contenu dans un boîtier 3. Il comprend au moins une première source lumineuse 4 et une seconde source lumineuse 5 chacune pouvant produire une lumière d'au moins deux couleurs, préférentiellement d'une première couleur comme le bleu et d'une seconde couleur comme le rouge. Le choix des couleurs étant de préférence basé sur des couleurs relativement distantes les unes des autres dans le spectre visible, ceci afin d'améliorer le rendu des mesures et en particulier d'accentuer le contraste de l'image obtenue. Les sources lumineuses 4, 5 émettent respectivement un premier faisceau incident I1 et un second faisceau incident I2. Chacun de ces faisceaux traverse respectivement un premier et un second organe optique 6, 7 pouvant être un homogénéisateur, un mélangeur ou un condenseur de lumière, voire également un ou une combinaison de plusieurs filtres par exemple.

En référence au premier faisceau incident I1 issu de la première source de lumière 4, ce faisceau est dévié en direction du substrat 2 par un premier organe de déviation 8 pouvant être un prisme ou un miroir de fonction équivalente. Ce premier faisceau incident pénètre ensuite dans un système optique de mesure 10 et en particulier dans un premier système optique 11 après avoir traversé une lame de déviation semi-transparente 9. Le système optique de mesure 10 constitue en fait l'objectif du dispositif de détection 1, alors que le premier système optique 11 n'en est qu'une partie. Ce dernier pouvant être constitué d'une lentille ou d'une combinaison de plusieurs lentilles lesquelles peuvent par exemple former un doublet.

La combinaison formée par le premier système optique 11, la lame de déviation semi-transparente 9, le premier organe de déviation 8 et le premier organe optique 6, constitue un système d'éclairage télécentrique 15. Le caractère télécentrique de ce système d'éclairage signifiant que le premier faisceau incident I1 frappe le substrat 2 parallèlement à une normale à ce substrat et qu'en raison du caractère spéculaire de ce substrat, ce faisceau est renvoyé en sens opposé le long de l'axe optique du système optique de mesure 10. Le système optique de mesure 10, formé du premier système optique 11 commun à l'éclairage et à la réception du faisceau réfléchi par le substrat 2 et par un second système optique 12, est conçu de manière à former un dispositif optique de mesure télécentrique, c'est-à-dire un dispositif dans lequel les rayons du faisceau lumineux sont sensiblement parallèles entre eux et perpendiculaires par rapport à la surface à éclairer.

Selon l'agencement des différents organes qui composent le dispositif de détection 1, on notera que le système d'éclairage télécentrique 15 pourrait être réduit à la combinaison du premier système optique 11 avec la lame de déviation semi-transparente 9. Ce cas de figure se rapporterait à une autre disposition de la première source lumineuse 4, laquelle serait alors alignée avec l'axe optique du premier système optique 11, à savoir suivant une position perpendiculaire au plan du substrat 2.

A la sortie du premier système optique 11, le premier faisceau incident I1 va éclairer le substrat perpendiculairement à son plan. Dans le cas où ce substrat comporterait une surface supérieure spéculaire, ce premier faisceau incident serait alors réfléchi vers le haut perpendiculairement au plan du substrat. Dès cet instant, on va alors dénommer comme premier faisceau réfléchi R1 ce premier faisceau incident réfléchi par le substrat. Ce faisceau réfléchi R1 va ensuite rencontrer une seconde fois la lame de déviation semi-transparente 9, mais cette fois-ci depuis le bas, et va être en partie réfléchi en direction d'un second système optique 12. Ce second système optique 12 fait partie du système optique de mesure 10 et constitue donc une autre portion de l'objectif du dispositif de détection 1. Comme illustré dans la figure 1, le second système optique 12 est préférentiellement constitué d'une pluralité de lentilles tel qu'un triplet ou un assemblage plus spécifique. Enfin, à la sortie du système optique de mesure 10, le premier faisceau réfléchi R1 frappe perpendiculairement un capteur photosensible 13. Suivant le mode de réalisation préféré, ce capteur est avantageusement un capteur photosensible linéaire, de type CMOS ou CCD, produisant une image d'une portion transversale du substrat 2 par rapport à son sens de déplacement 20.

En référence au second faisceau incident 12 issus de la seconde source lumineuse 5, on constate sur la figure 1 qu'il est également dévié à la sortie de l'organe optique 7 par un second organe de déviation 18 pouvant être un prisme ou un jeu de miroirs équivalent. Le cheminement de ce second faisceau incident 12 est tel qu'il pénètre ensuite dans le premier système optique sous un angle d'incidence non nul par rapport à l'axe optique de ce système. Cet angle d'incidence pouvant être typiquement de l'ordre de 10 à 40 degrés. A la sortie du premier système optique 11, ce faisceau incident I2 converge en direction du substrat 2 jusqu'à l'intercepter dans le plan focal du premier système optique 11. Ainsi, ce plan focal se trouve confondu avec le plan du substrat 2, plus particulièrement avec le plan de défilement de ce substrat. La combinaison formée par le premier système optique 11, le second organe de déviation 18 et le second organe optique 7, constitue un système d'éclairage oblique 25. Le caractère oblique se référant à l'angle d'incidence sous lequel le second faisceau I2 frappe le substrat 2 par rapport à la normale à ce substrat.

Selon l'agencement des différents organes qui composent le dispositif de détection 1, on notera également que le système d'éclairage oblique 25 pourrait être réduit au seul premier système optique 11, voire à une combinaison de ce premier système optique avec le second organe de déviation 18. Ce cas de figure se rapporterait à une autre disposition de la seconde source lumineuse 5, laquelle serait alors située dans un plan vertical incliné par rapport à l'axe optique du premier système optique 11.

Si la surface supérieure de ce substrat est diffusante, diffractante ou holographique, alors le second faisceau incident I2 va être diffusé ou diffracté dans toutes les directions au-dessus du plan de défilement du substrat. Une partie de cette réflexion diffuse va retourner en direction du système optique de mesure 10 et pénétrer dans le premier système optique 11. La portion de faisceau réfléchi qui se trouve proche de l'axe optique du premier système optique 11 va constituer le second faisceau réfléchi R2. Ce dernier va être ensuite réfléchi en partie par la lame de déviation semi-transparente 9 en direction du second système optique 12. A la sortie de ce second système optique 12, le second faisceau réfléchi R2 va finalement frapper la surface du capteur photosensible 13 au point de convergence du premier faisceau R1.

L'intensité des faisceaux réfléchis R1, R2, est modulée par les variations de réflexions du substrat. Cette intensité est transformée par le capteur photosensible en un signal ou en une information qui va pouvoir être acheminée à une unité électronique 14. Cette dernière comprend au moins une mémoire et un calculateur tel qu'un microprocesseur. L'unité électronique 14 a également pour but de commander l'activation des organes du dispositif de détection 1, notamment l'activation des différentes combinaisons d'éclairage données par le choix des couleurs et le choix des systèmes d'éclairages 15, 25 utilisés.

Afin de pouvoir traiter les données générées ou devant transiter par l'unité électronique 14, celle-ci est encore reliée à un port de communication 16. Grâce à ce port de communication il est possible d'exporter des données vers d'autres processeurs notamment pour pouvoir, à terme., asservir l'organe d'entraînement du substrat 2 et contrôler le déplacement de ce substrat. Une autre utilité du port de communication 16 réside dans le fait qu'il permette à l'inverse d'importer des données ou des ordres en vue d'adapter par exemple le procédé de détection appliqué au dispositif de détection 1.

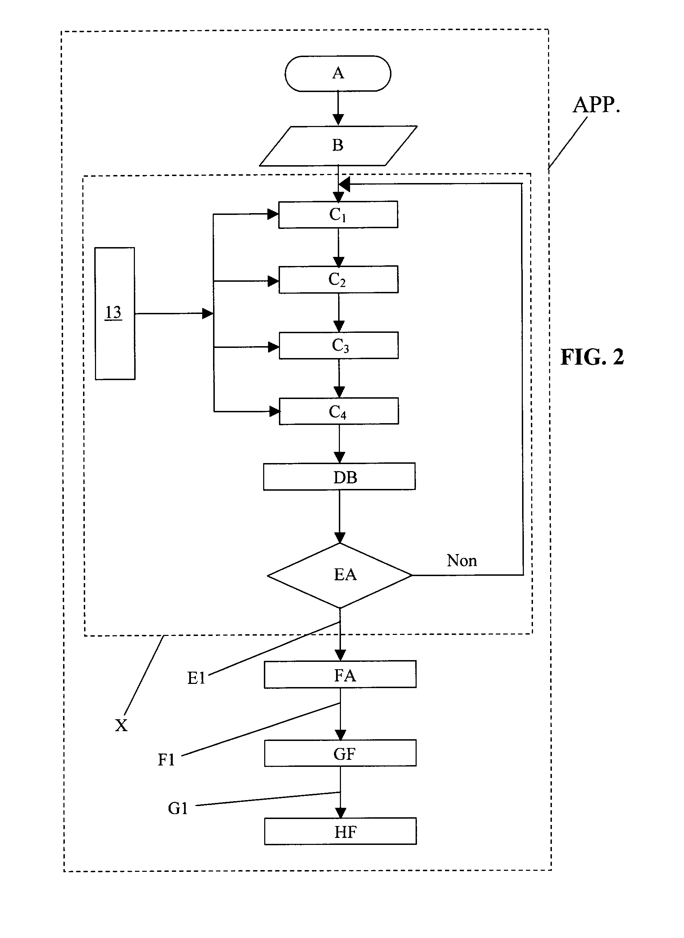

La figure 2 représente un organigramme illustrant le procédé de détection appliqué dans la phase d'apprentissage du dispositif de la figure 1. Cette phase d'apprentissage est initiée dans une première étape A. Ensuite, dans une seconde étape B, on observe la bande de matériau qui défile, et on procède à la définition d'un nombre de lignes L1 à Ln devant être lues, cela sur une distance correspondant à l'entre axe existant entre deux motifs ou, dans le cas de la détection d'un raccord de bande, sur une distance correspondant à la distance séparant deux raccords, ce qui permettra de définir le nombre de lignes de chaque condition d'éclairage à acquérir lors d'un cycle de détection. Ces conditions d'éclairage sont obtenues chacune par l'activation de l'une des sources lumineuses 4, 5 de couleur déterminée. En ayant deux couleurs de lumière, par exemple le bleu et le rouge, et en ayant deux cheminements possibles pour la lumière, un premier cheminement traversant le système d'éclairage télécentrique 15 et un second cheminement transitant par le système d'éclairage oblique 25, on obtient, dans le présent exemple, quatre conditions d'éclairage différentes, plus une pour la condition LED éteintes, condition non représentée sur la figure 2.

On définit des troisièmes étapes C1 à Cn et D, dans lesquelles les lignes L1 à Ln, lues successivement par le capteur photosensible 13, seront éclairées selon des conditions d'éclairage prédéterminées. Lesdites lignes L1 à Ln étant ensuite traitées séparément pour former une image correspondant à chacune des conditions d'éclairage prédéterminées.

Dans une quatrième étape, on mémorise également, selon le présent exemple, l'image des lignes L1 à L4 lues par le capteur photosensible 13 dans les étapes C1 à C4 et D, cela autant de fois qu'il est nécessaire pour arriver au nombre de lignes Ln correspondant à la distance séparant deux motifs ou raccords successifs, c'est-à-dire en effectuant autant de fois qu'il est nécessaire la boucle X comprenant les étapes C1 à C4, D et E. Une fois que la détermination du nombre de lignes de chaque condition d'éclairage à acquérir a été effectuée, on obtiendra une information E1 relative aux images des lignes L1 à L4, sous chaque condition d'éclairage différente, de la portion de substrat à examiner, c'est-à-dire, dans le présent cas, quatre images différentes.

L'information E1 sera traitée séparément dans une cinquième étape F de manière à déterminer quel sera l'éclairage optimum et de manière à déterminer les paramètres P1 à Pn associés, tels que par exemple la valeur d'un seuil de détection des objets ou des raccords ou des paramètres relatifs au substrat, à l'objet ou au raccord à détecter. A la sortie de l'étape F, on aura sélectionné l'éclairage optimum à utiliser ainsi que le seuil de détection qui lui est associé. Cette information étant représentée par une valeur F1 qui sera stockée dans une sixième étape G.

Les valeurs récoltées en F1 seront sauvegardées et mémorisées dans la mémoire du capteur photosensible 13 et la valeur de sortie G1 de l'étape G sera introduite dans une septième étape H, laquelle consiste à la mémorisation et à la sauvegarde des paramètres P1 à Pn et de la valeur du seuil de détection du motif ou du raccord à détecter. Ceci déterminera le début de la phase d'exploitation en production de la détection des motifs ou des raccords par la machine de traitement. L'ensemble de la phase d'apprentissage est représentée par la référence APP.

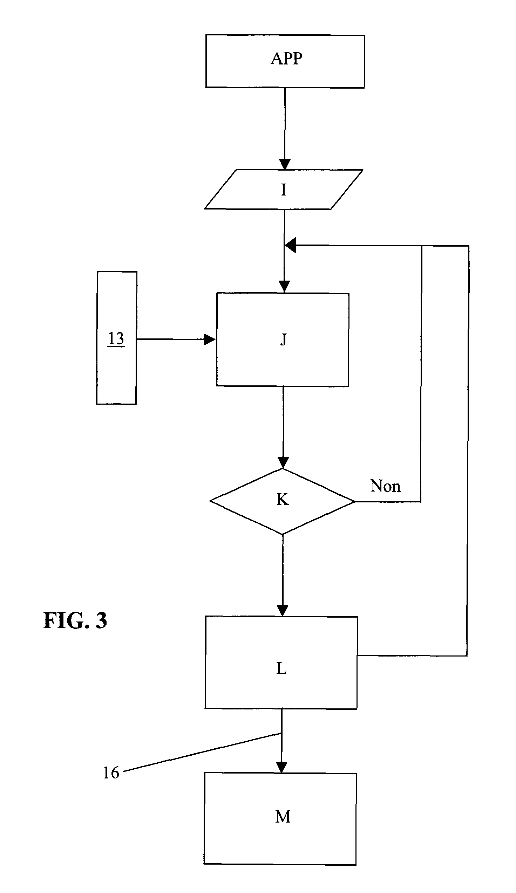

La figure 3 représente un organigramme illustrant le procédé appliqué dans la phase d'exploitation en production du dispositif de la figure 1. La phase d'exploitation en production du dispositif de détection 1 débute par le chargement, dans une huitième étape I, des paramètres P1 à Pn et de la valeur du seuil de détection obtenus dans la phase d'apprentissage APP.

Ensuite, on procède à l'observation du substrat, à savoir de la bande de matériau en défilement, au moyen du capteur photosensible 13 et on compare, dans une neuvième étape J, le résultat de cette observation ou lecture de la bande de matériau avec le seuil de détection obtenu au cours de la phase d'apprentissage APP. Le résultat de cette comparaison va produire une information, traitée dans une dixième étape K, qui donnera une valeur de signal plus grande ou plus petite que la valeur du seuil de détection. Dans le cas où la valeur du signal résultant de l'étape K est plus petite que la valeur du seuil de détection, le traitement sera recommencé car cette condition sera l'indication qu'aucun motif ou raccord n'aura été détecté. Dans le cas où la valeur du signal résultant de l'étape K est plus grande que la valeur du seuil de détection, nous nous trouverons en présence soit d'un motif, soit d'un raccord et le signal résultant de l'étape K sera transmis à l'interface machine M, au cours d'une onzième étape L par l'intermédiaire du port de communication 16. Le dispositif de détection 1 travaillera continuellement durant toute la production de la machine de traitement, cela jusqu'à ce qu'un changement de travail intervienne. Au moment de ce changement de travail, il se produira à nouveau une phase d'apprentissage APP suivie d'une nouvelle phase d'exploitation en production.

En guise de variante, on notera que le dispositif de détection 1 pourrait comprendre plus de deux sources lumineuses. Aussi, chacune de ces sources pourrait être une source de type LED capable de produire une lumière de deux ou de trois couleurs différentes. Le nombre de couleurs possibles n'étant toutefois nullement limité à deux ou trois. De plus, ces couleurs pourraient être obtenues soit par des sources lumineuses produisant directement une lumière colorée, soit par une combinaison d'une source de couleur blanche avec un ou plusieurs filtres colorés. On rappellera encore que le nombre de couleurs possibles conditionne directement le nombre de combinaisons d'éclairage possibles.

En guise de variante, il pourrait être également prévu que le second organe de déviation 18 puisse être réglable en pivotement. Ainsi, il deviendrait possible de choisir l'angle d'incidence optimum pour l'éclairage du substrat à l'aide du système d'éclairage oblique.

Grâce au dispositif de détection 1 décrit ci-avant, il devient possible de détecter efficacement avec une bonne fiabilité tout type de motif sur tout type de substrat. En effet, dans le cas où la surface du substrat serait spéculaire, unie ou structurée, on privilégiera l'utilisation du système d'éclairage télécentrique 15 pour détecter le motif et en particulier les différences d'intensité entre le faisceau réfléchi R1 sur le motif et ce même faisceau appliqué sur le fond du substrat. A l'inverse, lorsqu'on souhaite détecter un motif sur un substrat présentant une surface décorative diffuse ou bien lorsque le motif est formé d'une surface à effet de diffraction, on privilégiera l'utilisation du système d'éclairage oblique 25 de façon à obtenir un meilleur rapport signal/bruit. De plus, en vue d'améliorer le contraste de l'image obtenue par le capteur photosensible, il est encore possible de choisir un éclairage d'une couleur spécifique, et ceci pour chacun des deux modes d'éclairage décrits.

On peut constater que dans ce procédé, l'intervention d'un opérateur n'est nullement nécessaire pour pouvoir déterminer quelle est la combinaison d'éclairage qui convienne le mieux pour détecter un motif donné sur un substrat quelconque. Avantageusement, le procédé de la présente invention est capable d'effectuer cette détermination sur la plus courte des longueurs de bande possible. Dans le cas de l'utilisation de bandes structurées ou imprimées par un cylindre, cette longueur correspond à la distance séparant deux motifs ou raccords consécutifs. Ainsi, les pertes de matériau s'en trouvent réduites au maximum tout comme le temps nécessaire au réglage et au calibrage du dispositif de détection.

Grâce à la rapidité du traitement de l'image fournie par le capteur photosensible 13, le dispositif de détection 1 peut effectuer une lecture du substrat dans un temps suffisamment court pour qu'il soit possible de réaliser toutes les comparaisons des différents éclairages durant le passage d'un seul et même motif ou raccord. Cette rapidité de traitement découle également du fait qu'il a été prévu d'intégrer un capteur photosensible 13 de type linéaire. En effet, grâce à ce type de capteur, il devient possible d'obtenir une image pouvant se traduire en une information à la fois fiable et très peu volumineuse. Au contraire, dans le cas d'une utilisation d'un capteur monopixel, l'information transmise ne peut pas être considérée comme suffisamment fiable du fait qu'un simple défaut dans la surface du substrat pourrait être interprété comme la détection d'un motif alors que cela n'est en réalité pas le cas. A l'inverse, l'emploi de capteurs restituant une surface de plusieurs centaines ou plusieurs milliers de pixels devient une information volumineuse qui devra être traitée dans un temps forcément plus important. Les temps de réponse seront dans ce cas plus longs et les performances du dispositif de détection en seront ainsi réduites d'autant.

Avantageusement, grâce au caractère télécentrique du système d'éclairage et de mesure, la dimension de l'objet à contrôler ne varie pas en fonction de sa position dans le champ de l'objectif du dispositif de détection, et en particulier en fonction de son éloignement.

Avantageusement encore, grâce au partage de certains composants optiques, tels que le premier système optique 11 et la lame de déviation semi-transparente 9, pour l'application de plusieurs fonctions, comme celles des systèmes d'éclairage télécentrique 15 et oblique 25 ainsi que celle du système optique de mesure 10, il devient possible de réduire le nombre d'éléments du dispositif de détection 1, ainsi que de diminuer la taille du boîtier 3.

Grâce à la combinaison de deux voies d'éclairages intégrées dans le même boîtier 3 du dispositif de détection, tout réglage manuel de l'angle d'éclairage par rapport au substrat devient inutile. Il suffit donc de disposer le boîtier dans une position unique, par exemple horizontale suivant les positions relatives du substrat et de l'objectif, pour que le dispositif de détection soit correctement installé. Il s'ensuit à la fois un gain de temps lors de la préparation de la machine et une assurance de disposer en tout temps d'un angle d'éclairage optimal.

Bien qu'il soit prévu que le procédé puisse choisir une combinaison d'éclairage sans déterminer d'ordre dans la sélection, il est clair qu'il est généralement prévu d'effectuer cette sélection en fonction d'un ordre particulier défini par avance. L'ordre dans lequel cette sélection est effectuée sera également défini et mémorisé dans l'unité électronique 14.

## Revendications

1. Dispositif de détection (1) de motifs sur un substrat, entraîné en défilement, notamment sur un substrat à déposer sur une matière en bande ou en feuilles, substrat entraîné en défilement selon un sens de déplacement (20), comprenant dans un boîtier (3) un premier faisceau incident (I1) issu d'une première source lumineuse (4), un second faisceau incident (I2) issu d'une seconde source lumineuse (5), un système optique de mesure (10), un capteur photosensible (13) recevant respectivement des faisceaux réfléchis (R1, R2) par le substrat (2) et une unité électronique (14) reliée à un port de communication (16), **caractérisé en ce que** le système optique de mesure (10) est télécentrique et **en ce que** le premier faisceau incident (I1) traverse un système d'éclairage télécentrique (15) et le second faisceau incident (I2) traverse un système d'éclairage oblique (25).

2. Dispositif de détection (1) selon la revendication 1, **caractérisé en ce que** le système optique de mesure (10) comprend, d'une part un premier système optique (11) traversé par lesdits faisceaux incidents (I1, I2) et les faisceaux réfléchis (R1, R2) respectifs, et d'autre part un second système optique (12) traversé seulement par lesdits faisceaux réfléchis (R1, R2) après réflexion sur une lame de déviation semi-transparente (9).

3. Dispositif de détection (1) selon la revendication 2, **caractérisé en ce que** le système d'éclairage télécentrique (15) comprend la lame de déviation semi-transparente (9) ainsi que le premier système optique (11), et **en ce que** le système d'éclairage oblique (25) comprend le même premier système optique (11).

4. Dispositif de détection (1) selon la revendication 1, **caractérisé en ce que** le capteur photosensible (13) est un capteur photosensible linéaire produisant une image d'une portion transversale du substrat (2) par rapport à son sens de déplacement (20).

5. Dispositif de détection (1) selon la revendication 1, **caractérisé en ce que** la première source lumineuse (4) et la seconde source lumineuse (5) peuvent chacune produire une lumière d'au moins une première couleur et une seconde couleur.

6. Dispositif de détection (1) selon la revendication 5, **caractérisé en ce que** ladite première couleur est le bleu et ladite seconde couleur est le rouge.

7. Dispositif de détection (1) selon la revendication 3, **caractérisé en ce que** le système d'éclairage oblique (25) comprend un second organe de déviation (18) du second faisceau incident (I2) et **en ce que** ce second organe de déviation est réglable en pivotement.

8. Procédé de détection de motifs ou de raccords sur un substrat (2), entraîné en défilement, par rapport à un dispositif de détection (1), par un organe d'entraînement, **caractérisé en ce qu'**il comporte les étapes suivantes:
a) Que, dans une première phase, dite d'apprentissage (APP), l'on procède à une initialisation.
b) Que, l'on définisse ensuite une seconde étape (B) dans laquelle on observe le substrat (2) et que l'on procède à la définition d'un nombre de lignes (L1 à Ln) devant être lues par un capteur photosensible (13) sur une distance correspondant à l'entre axe existant entre deux motifs ou raccords;
c) Que, dans cette phase d'apprentissage (APP), l'on définisse des troisièmes étapes (C1 à Cn, D) dans lesquelles les lignes (L1 à Ln), lues successivement par le capteur photosensible (13), seront éclairées selon des conditions d'éclairage prédéterminées, lesdites lignes (L1 à Ln) étant ensuite traitées séparément pour former une image correspondant à chacune des conditions d'éclairage prédéterminées ;
d) Que, dans une quatrième étape de cette phase d'apprentissage (APP), l'on mémorise l'image des lignes (L1 à L4) de chaque condition d'éclairage lues par le capteur photosensible (13) dans les secondes étapes (C1 à C4, D), cela autant de fois qu'il est nécessaire pour arriver au nombre de lignes (Ln) séparant deux motifs ou raccords successifs, en répétant autant de fois qu'il est nécessaire les opérations de la boucle (X) comprenant secondes étapes (C1 à C4, D);
e) Que, dans cette phase d'apprentissage (APP), les images des lignes (L1 à L4) de chaque condition d'éclairage sont traitées individuellement dans une cinquième étape (F) pour obtenir une condition d'éclairage optimale et pour obtenir des paramètres (P1 à Pn), relatifs au substrat (2) et au motif ou au raccord à détecter, et que l'on détermine la valeur d'un seuil de détection du motif ou du raccord à détecter;
f) Que, dans cette phase d'apprentissage (APP), l'on procède, dans une sixième étape (G), au stockage des informations issues de l'étape (F) dans une valeur F1.
g) Que, dans cette phase d'apprentissage (APP), l'on procède, dans une septième étape (H), à la mémorisation et à la sauvegarde des paramètres (P1 à Pn) et de la valeur du seuil de détection du motif ou du raccord à détecter;
h) Que, dans une seconde phase, dite de d'exploitation en production, l'on charge les paramètres (p1 à Pn) et la valeur du seuil de détection obtenus dans la phase d'apprentissage (APP) dans une huitième étape (I);
i) Que, dans cette phase d'exploitation en production, dans une neuvième étape (J), l'on procède à l'observation du substrat (2) au moyen du capteur photosensible (13) et que l'on compare le résultat de cette observation avec le seuil de détection obtenu au cours de la phase d'apprentissage (APP);
j) Que, dans cette phase d'exploitation en production, dans une dixième étape (K), l'on compare le résultat obtenu dans la septième étape (J) avec la valeur du seuil de détection pour déterminer la présence ou l'absence d'un motif ou d'un raccord ;
k) Que, dans cette phase d'exploitation en production, dans une onzième étape (L), un signal indiquant la présence d'un motif ou d'un raccord soit transmis, par un port de communication (16), à un interface machine (M).

9. Procédé selon la revendication 8, **caractérisé en ce que** le signal transmis à l'interface machine (M), par le port de communication (16) correspond à une valeur de repérage du positionnement du motif ou du raccord sur le substrat (2).

10. Procédé selon la revendication 9, **caractérisé en ce que** l'organe d'entraînement du substrat (2) est asservi en fonction du signal transmis à l'interface machine (M), par le port de communication (16).
